# EUROPEAN PATENT APPLICATION

(11) **EP 3 627 422 A1**
(43) Date of publication of application: **25.03.2020**
(21) Application number: 19183329.2
(22) Date of filing: 28.06.2019
(51) Int. Cl.: G06Q 20/18, G07F 19/00

(54) **AUTOMATED TELLER MACHINE WITH THREE MODES**

(30) Priority: 26.08.2018 US 201816112751
(71) Applicant: NCR Corporation, Atlanta, GA 30308-1007 (US)
(72) Inventor: SWAINE, Stephen W, Atlanta, GA Georgia 30308-1007 (US)
(74) Representative: Secerna LLP

(57) **Abstract**

To more efficiently use space and equipment, an automated teller machine can be made to switch easily among any of three modes, such as a self-service mode, an assisted-service mode, and a teller-service mode. The ATM can include a display (102) positioned on a housing. The display can be rotatably positionable about an axis. A position sensor can sense a rotational position of the display. A processor can determine a mode of operation of the automated teller machine in response to the sensed rotational position of the display. In response to the determination that the rotational position corresponds to one of three specified rotational positions, the processor can automatically select one of three specified sets of settings for the automated teller machine and/or one of three specified sets of selectable options on the display.

## Description

The present disclosure relates generally to an automated teller machine (ATM).

Self-service automated teller machines positioned inside a bank branch are generally not used when the bank branch is open. This is an inefficient use of the space taken up by the automated teller machine.

According to a first aspect of the present invention there is provided an apparatus for an automated teller machine, comprising: a housing; a display positioned on the housing, the display being rotatably positionable about an axis; a position sensor configured to sense a rotational position of the display; and a processor configured to determine a mode of operation of the automated teller machine in response to the sensed rotational position of the display.

Optionally, different modes of operation of the automated teller machine may include different settings of the automated teller machine.

Optionally, when the display is positioned at a first rotational position, the processor is configured to set the automated teller machine to a first set of settings; when the display is positioned at a second rotational position different from the first rotational position, the processor is configured to set the automated teller machine to a second set of settings different from the first set of settings; and when the display is positioned at a third rotational position different from the first and second rotational positions, the processor is configured to set the automated teller machine to a third set of settings different from the first and second sets of settings.

Optionally, the display is manually rotatable by an operator of the automated teller machine, and the processor is configured to switch automatically between different sets of settings in response to the rotation.

Optionally, the rotation of the display may include detents configured to snap the display into one of the first, second, or third rotational positions.

Optionally, further comprising a locking mechanism configured to prevent rotation of the display away from one of first, second, or third rotational positions.

The housing may include a customer-facing side and a teller-facing side opposite the customer-facing side.

Optionally, the first rotational position is facing toward the customer-facing side of the housing and facing a customer position; and the first set of settings includes self-service settings.

The self-service settings may include at least one of: a first amount of cash available for withdrawal, first recycler settings, first counterfeit settings, first denominations of cash available, and access to a customer-only vault.

Optionally, the second rotational position is facing toward the customer-facing side of the housing but angled away from a customer position; and the second set of settings includes assisted-service settings.

Optionally the assisted-service settings may include at least one of: a second amount of cash, greater than the first amount, available for withdrawal, second recycler settings that are less restrictive than the first recycler settings, second counterfeit settings that are less restrictive than the first counterfeit settings, second denominations, greater than the first denominations, of cash available, and access to a customer-only vault and a teller-only vault.

Optionally, the third rotational position is facing away from the customer-facing side of the housing; and the third set of settings includes teller-service settings.

Optionally, the teller-service settings may include at least one of: a third amount of cash, greater than the second amount, available for withdrawal, third recycler settings that are less restrictive than the second recycler settings, third counterfeit settings that are less restrictive than the second counterfeit settings, third denominations, greater than the second denominations, of cash available, and access to a customer-only vault and a teller-only vault.

Different modes of operation of the automated teller machine may include different selectable options displayed on the display.

Optionally, when the display is positioned at a first rotational position, the processor is configured to display a first set of selectable options on the display; when the display is positioned at a second rotational position different from the first rotational position, the processor is configured to display a second set of selectable options, different from the first set of selectable options, on the display; and when the display is positioned at a third rotational position different from the first and second rotational positions, the processor is configured to display a third set of selectable options, different from the first and second sets of selectable options, on the display.

Optionally, further comprising a recycler positioned in the housing and coupled to the processor, the recycler configured to dispense and accept deposit of bank notes.

Optionally, further comprising a sidecar positioned in the housing horizontally adjacent to the recycler and coupled to the processor, the sidecar including at least one of a receipt printer, a check scanner, a document scanner, a statement printer, and a coin dispenser.

Optionally, further comprising an interface positioned on the housing above the sidecar and coupled to the processor, the interface including at least one of a touch-sensitive display, a contactless card reader, a security camera, and an audio jack.

According to a second aspect of the present invention there is provided a method for operating an automated teller machine having a rotatable display, the method comprising: sensing, with a rotation sensor coupled to a processor, a rotational position of the rotatable display; determining, with the processor, that the rotational position corresponds to one of three specified rotational positions; and in response to the determination that the rotational position corresponds to one of three specified rotational positions, selecting, with the processor, one of three specified sets of settings for the automated teller machine.

According to a third aspect of the present invention, there is provided a method for operating an automated teller machine having a rotatable display, the method comprising: sensing, with a rotation sensor coupled to a processor, a rotational position of the rotatable display; determining, with the processor, that the rotational position corresponds to one of three specified rotational positions; and in response to the determination that the rotational position corresponds to one of three specified rotational positions, displaying, with the processor, one of three specified sets of selectable options on the display.

These and other aspects of the present invention will be apparent from the following specific description, given by way of example, with reference to the accompanying drawings, in which:
FIG. 1 shows an example of an automated teller machine, in accordance with some embodiments.
FIG. 2 shows examples of the automated teller machine of FIG. 1 in a self-service mode, an assisted-service mode, and a teller-service mode, in accordance with some embodiments.
FIG. 3 shows a top view of the configurations of FIG. 2.
FIG. 4 shows a top view of an example of how the automated teller machine of FIG. 1 can utilize a space, in accordance with some embodiments.
FIG. 5 shows an example of a recycler of the automated teller machine of FIG. 1, in accordance with some embodiments.
FIG. 6 shows an example of a sidecar of the automated teller machine of FIG. 1, in accordance with some embodiments.
FIG. 7 shows an example of an interface of the automated teller machine of FIG. 1, in accordance with some embodiments.
FIG. 8 shows a specific example of a recycler, a sidecar, and an interface, for the automated teller machine of FIG. 1, in accordance with some embodiments.
FIG. 9 shows a flowchart of an example of a method for operating an automated teller machine, in accordance with some examples.
FIG. 10 shows a block diagram of an example of a controller, such as a self-service terminal, in accordance with some examples.

Corresponding reference characters indicate corresponding parts throughout the several views. Elements in the drawings are not necessarily drawn to scale. The configurations shown in the drawings are merely examples and should not be construed as limiting the scope of the inventive subject matter in any manner.

To more efficiently use space and equipment, an automated teller machine (ATM) can be made to switch easily among any of three modes, such as a self-service mode, an assisted-service mode, and a teller-service mode.

In the self-service mode, an interface can be turned to face a customer side of a teller counter. Additionally, a processor of the ATM can switch control of the interface automatically to an interface lead-through of the ATM. The customer can control the ATM and carry out transactions unaided.

In the assisted-service mode, the interface can be turned at an angle such that the teller and customer can both see the interface. Additionally, the processor of the ATM can switch control of the interface to the self-service mode and interface, or alternatively can switch control of the interface to a unique assisted lead-through interface. In some examples, the customer can operate the interface with assistance from the teller. In other examples, the teller can operate the interface to show the customer how the interface is used. In still other examples, the teller can be located in a call center, remote from the ATM, and can assist the customer through a telephone handset and a video link on the display.

In the teller-service mode, the interface can be turned to face a teller side of the teller counter, facing away from the customer side of the teller counter. Additionally, the processor of the ATM can switch control of the interface to the teller. In some examples, the teller can instruct the customer to take one or more items from a sidecar. In some examples, the teller can transport cash between the customer and a recycler of the ATM (e.g., cash dispensed from the recycler, or deposited into the recycler). In addition, the interface can allow the teller to perform teller-specific functions on the ATM, such as performing a secondary security authorization, or accessing separate banking interface systems. In some examples, the interface can allowing a particular device, stored securely in the ATM, to access a separate banking interface system.

There are advantages for having an ATM that can switch among any of the three modes.

A first advantage is that a relatively high capacity of cash can be deposited and dispensed using the high security protocols associated with ATM technology.

A second advantage is that the cash transactions can be reconciled using the established protocols associated with ATM technology.

A third advantage is that transactions become more focused on the customers. This allows banks to replace a traditional line of tellers and introduce branch transformation technology in an innovative manner. Such a transformation can be directed toward a so-called universal agent, which can allow the bank to have greater flexibility for staffing and can grant more customer fulfillment at a teller line. In some examples, customers can configure technology to suit differing customer and cash management demands throughout the banking day, thereby maximizing their technology investment.

A fourth advantage is that the bank can establish off-premise mini branches, which can be staffed at certain times of the day and un-staffed at other times. Similarly, the bank can establish new formats for the branches.

A fifth advantage is that the ATM increases in functionality by adding additional sidecars.

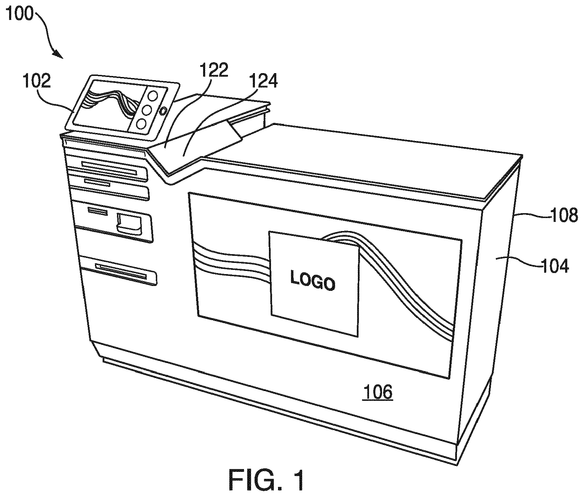

FIG. 1 shows an example of an automated teller machine 100, in accordance with some embodiments. The automated teller machine 100 is switchable among a self-service mode, an assisted-service mode, and a teller-service mode. The configuration of FIG. 1 is but one example of an automated teller machine 100 that can switch between modes; other suitable configurations can also be used.

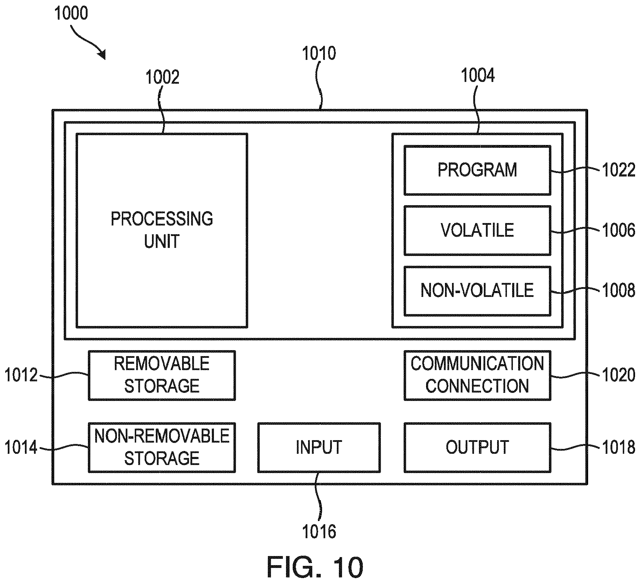

The automated teller machine 100 can include a housing 104. The housing 104 can include a customer-facing side 106, and a teller-facing side 108 positioned opposite the customer-facing side 106. The housing 104 can house other elements of the automated teller machine 100, such a processor or processing unit, memory, removable and/or non-removable storage, one or more input/output devices, and one or more communication connections. (See FIG. 10 below.) The housing 104 can include one or more doors that open from the teller-facing side 108, which can allow access to elements within the housing 104.

The automated teller machine 100 can include a repositionable display 102. In some examples, the display 102 can be positioned on the housing 104, optionally on a top of the housing 104. In some examples, the display 102 can be rotatably positioned to rotate azimuthally about an axis, so that the display 102 can rotate to face a customer head-on, face the customer at an angle, and face away from a customer. The axis can be oriented vertically, horizontally, diagonally, or with any other suitable orientation. In some examples, the axis can be more complex than a single line, but can include a curved path, such as a helix.

In some examples, a user, such as a teller or other bank employee, can reposition the display 102. In some examples, the automated teller machine 100 can include a locking mechanism for the display 102, such that the display can only be moved if the user access via a key or other suitable mechanism.

In some examples, the user can reposition the display 102 by forcibly moving the display 102 from one azimuthal position to another. In some examples, the display 102 can have a plurality of specific positions, such as detents, at which the display can removably lock. For these examples, the user can forcibly move the display 102 from a first specified position to a second specified position, and the display 102 will automatically lock (or click) into the second specified position. In other examples, the automated teller machine 100 can include one or more actuators that can move the display from a first specified position to a second specified position.

In some examples, a position sensor 122 can sense a rotational position of the display. In some examples, a processor 124 can determine a mode of operation of the automated teller machine in response to the sensed rotational position of the display.

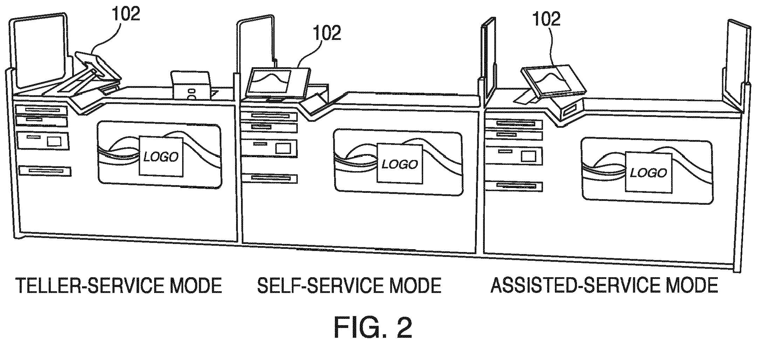

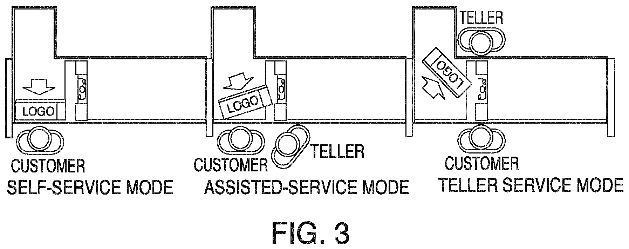

In some examples, the position of the display 102 can determine a mode of operation of the automated teller machine 100. The modes can include different options and/or different services available at the automated teller machine 100. These modes are explained in FIGS. 2 and 3 below.

FIG. 2 shows examples of the automated teller machine of FIG. 1 in a self-service mode, and an assisted-service mode, and a teller-service mode, in accordance with some embodiments. FIG. 3 shows a top view of the configurations of FIG. 2.

In some examples, if a user positions the display in a first position, such as facing directly toward the customer side of the automated teller machine 100, the automated teller machine 100 can automatically enter a self-service mode.

In some examples, the self-service mode can include options and/or features that are relatively restrictive, because there may not be any bank personnel present. For example, the relatively restrictive options and/or features can include: a relatively low amount of cash available for withdrawal, relatively restrictive recycler settings, relatively strict counterfeit settings, relatively small denominations of cash available, and/or access to a customer-only vault. These are but mere examples; other options and/or features can also be used.

In some examples, if a user positions the display in a second position, such as facing the customer side of the automated teller machine 100 but angled away from the customer, the automated teller machine 100 can automatically enter an assisted-service mode.

In some examples, the assisted-service mode can include options and/or features that are less restrictive than the self-service mode, because bank personnel may be present to supervise activity at the automated teller machine 100. For example, the less restrictive options and/or features can include: a relatively moderate amount of cash available for withdrawal, relatively moderate recycler settings, relatively moderate counterfeit settings, relatively moderate denominations of cash available, and/or access to a customer-only vault and a teller-only vault. These are but mere examples; other options and/or features can also be used.

In some examples, if a user positions the display in a third position, such as facing away from the customer side of the automated teller machine 100, the automated teller machine 100 can automatically enter a teller-service mode.

In some examples, the teller-service mode can include options and/or features that are less restrictive than the assisted-service mode, because bank personnel present may perform tasks that are not trusted to be performed by customers. For example, the loosely-restrictive options and/or features can include: a relatively large amount of cash available for withdrawal, relatively loose recycler settings, relatively loose counterfeit settings, relatively large denominations of cash available, and/or access to a customer-only vault and a teller-only vault. These are but mere examples; other options and/or features can also be used.

The automated teller machine 100 of FIG. 1 can make better use of space than typical automated teller machines, which are generally unused during banking hours.

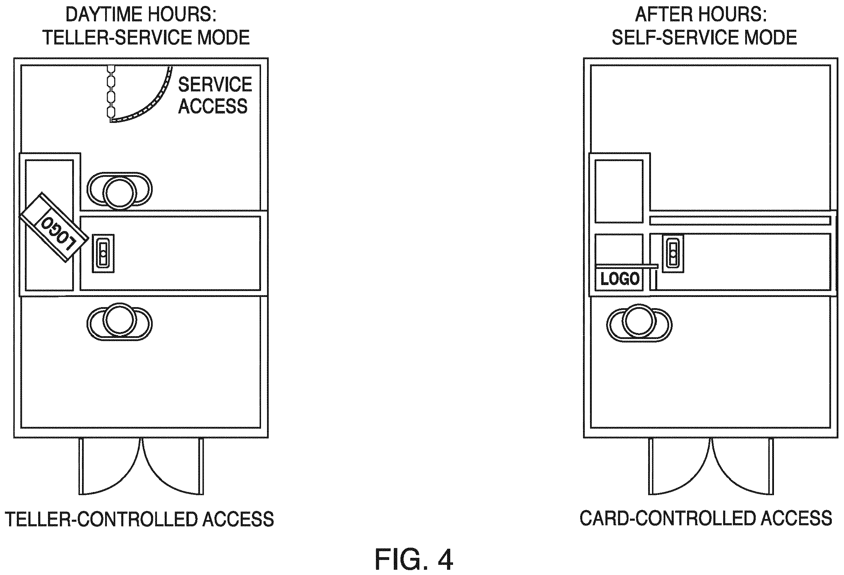

FIG. 4 shows a top view of an example of how the automated teller machine 100 of FIG. 1 can utilize a space, in accordance with some embodiments. The configuration of FIG. 4 is but one example of how the automated teller machine 100 of FIG. 1 can utilize a space; other suitable configurations can also be used.

The automated teller machine 100 can be positioned between a customer-controlled space and a teller-controlled space. During daytime hours, when the bank space can be staffed by a teller, the automated teller machine 100 can operate in teller-service mode. A customer can approach the automated teller machine 100 through an area that is controlled by the teller. For example, the teller can open and close doors to allow or deny access to the customer-facing side of the automated teller machine 100, as needed. After hours, when there is no teller present, the automated teller machine 100 can operate in self-service mode. The customer can access the customer-controlled space via card access, such as by swiping an ATM card or a bank card. The customer cannot access the teller-controller space behind the automated teller machine 100.

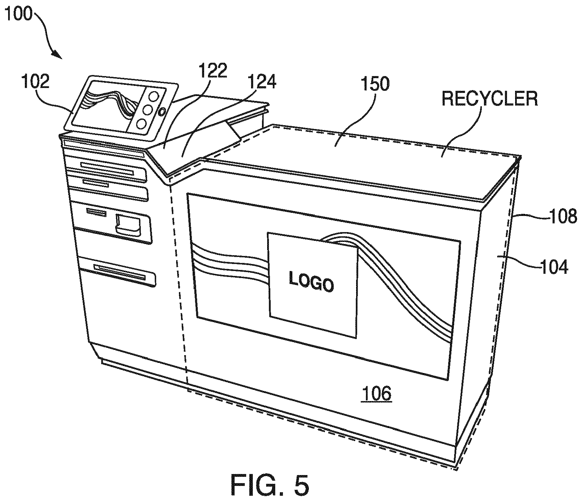

FIGS. 5-7 show various elements of the automated teller machine 100 of FIG. 1.

FIG. 5 shows an example of a recycler 150 of the automated teller machine 100 of FIG. 1, in accordance with some embodiments. The recycler 150 of FIG. 5 is but one example of a recycler; other suitable recyclers can also be used.

In some examples, the recycler 150 can be an ATM cash recycling device than can dispense and accept deposit of bank notes. In some examples, the recycler 150 can be contained within a security enclosure, within a housing of the automated teller machine 100. As an alternative, instead of a recycler 150, the automated teller machine 100 can use a dispenser, which can dispense bank notes but not accept deposit of bank notes.

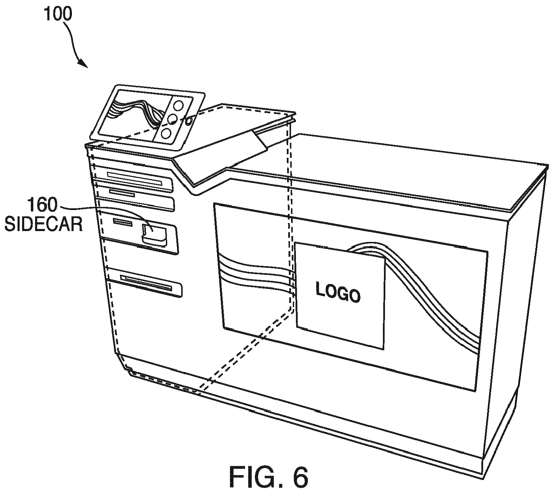

FIG. 6 shows an example of a sidecar 160 of the automated teller machine 100 of FIG. 1, in accordance with some embodiments. The sidecar 160 of FIG. 6 is but one example of a sidecar; other suitable sidecars can also be used.

In some examples, the sidecar 160 can be a semi-secure container, positioned at a side of the recycler 150 within the housing of the automated teller machine 100. The sidecar 160 can include one or more devices, such as a receipt printer, a check scanner, a document scanner, a statement printer, a coin dispenser, and others. In some examples, the sidecar 160 can house the devices, and can allow customer-side access to the devices, as needed.

In FIG. 6, the sidecar 160 is shown as being a unitary element, with multiple devices stacked vertically. Other configurations are possible, such as a single-function sidecar, which can have a narrower footprint and can occupy less volume in the automated teller machine 100, or multiple sidecars, which can have a wider footprint than the single sidecar 160 of FIG. 6. Other suitable configurations are also possible.

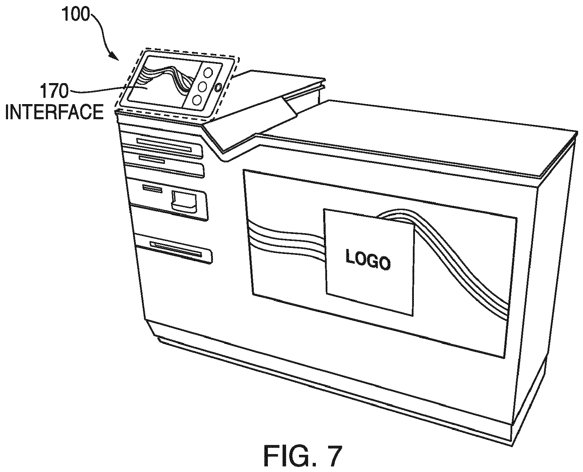

FIG. 7 shows an example of an interface 170 of the automated teller machine 100 of FIG. 1, in accordance with some embodiments. The interface 170 of FIG. 7 is but one example of an interface 170; other suitable interfaces can also be used.

In some examples, the interface 170 can include elements that perform multiple functions. A display can display instructions, images, videos, and other data to a customer. In some examples, the display can be touch-sensitive, and can receive input from the customer. In some examples, the interface 170 can additionally include a keypad for receiving input from the customer. In some examples, the display can guide the customer through sequential selections, and can be referred to as an interaction lead through display. A card reader can read data from card inserted into the card reader, or placed into proximity to the card reader. A security camera can capture video of the customer. Accessibility features, such as audio lead through, can assist the customer in completing a transaction.

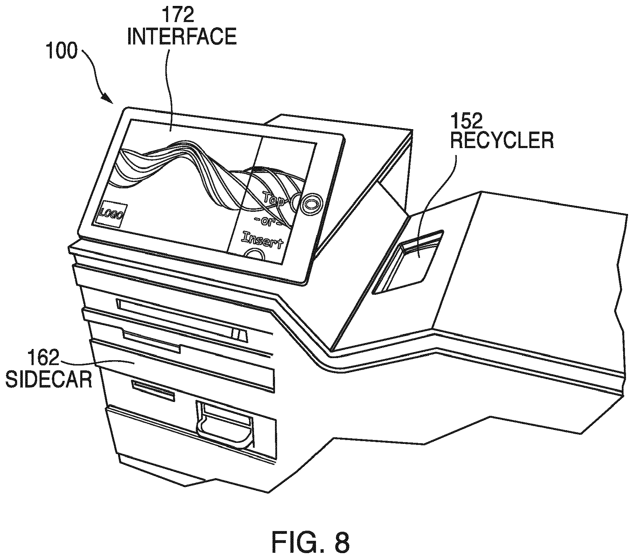

FIG. 8 shows a specific example of a recycler 152, a sidecar 162, and an interface 172, for the automated teller machine 100 of FIG. 1, in accordance with some embodiments.

In some examples, the recycler 152 can be a cash recycler, which can dispense can and receive a cash deposit. In some examples, the recycler 152 can be positioned longitudinally under a counter (e.g., a top side of the automated teller machine 100, which can be configured as a shelf).

In some examples, the interface 172 can be perform primary functions of the automated teller machine 100. The interface 172 can include a touch display having a relatively large size, such as a fifteen-inch diagonal, a contactless card reader, a smart DIP reader, an element that can draw and accept signatures on the screen, one or more cameras, an audio jack, and an element that can scan identification. The interface 172 can perform other suitable functions as well.

In some examples, the sidecar 162 can perform secondary functions of the automated teller machine 100. The sidecar 162 can include a document scanner that can accept relatively large documents, such as A4 documents, an element that can accept check deposits, a receipt printer, a coin dispenser, and a statement printer. The sidecar 162 can perform other suitable functions as well.

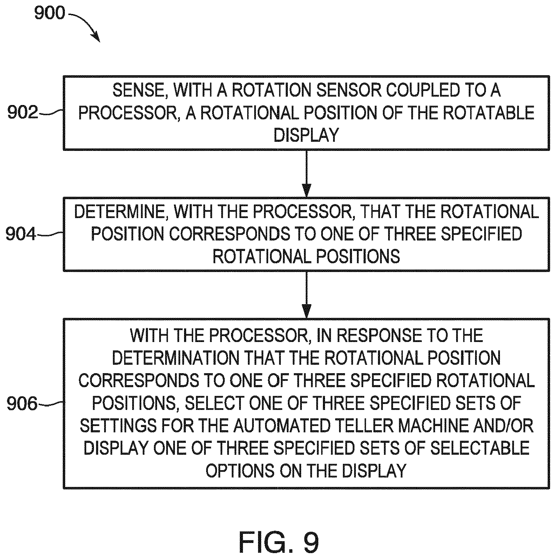

FIG. 9 shows a flowchart of an example of a method 900 for operating an automated teller machine having a rotatable display, in accordance with some examples. The method can be executed on the automated teller machine 100 of FIG. 1, or on any other suitable automated teller machine. The method 900 is but one example of a method for operating an automated teller machine; other suitable methods can also be used.

At operation 902, the automated teller machine can sense, with a rotation sensor coupled to a processor, a rotational position of the rotatable display.

At operation 904, the automated teller machine can determine, with the processor, that the rotational position corresponds to one of three specified rotational positions.

At operation 906, the automated teller machine can, with the processor, in response to the determination that the rotational position corresponds to one of three specified rotational positions, select one of three specified sets of settings for the automated teller machine and/or display one of three specified sets of selectable options on the display.

FIG. 10 shows a block diagram of an example of a controller 1000, such as an automatic teller machine, in accordance with some examples. The controller 1000 can be part of a system that includes an interface device, a sleeve, fascia, shutter, actuator, circuitry, optional ratchets, and other optional elements. The example of FIG. 10 is but one configuration for a controller; other configurations can also be used.

In one example, multiple such controllers 1000 are utilized in a distributed network to implement multiple components in a transaction based environment. An object-oriented, service-oriented, or other architecture may be used to implement such functions and communicate between the multiple controllers 1000 and components.

One example of a controller 1000, in the form of a computer 1010, can include a processing unit 1002, memory 1004, removable storage 1012, and non-removable storage 1014. Memory 1004 may include volatile memory 1006 and non-volatile memory 1008. Computer 1010 may include, or have access to a computing environment that includes, a variety of computer-readable media, such as volatile memory 1006 and non-volatile memory 1008, removable storage 1012 and non-removable storage 1014. Computer storage includes random access memory (RAM), read only memory (ROM), erasable programmable read-only memory (EPROM) and electrically erasable programmable read-only memory (EEPROM), flash memory or other memory technologies, compact disc read-only memory (CD-ROM), Digital Versatile Disks (DVD) or other optical disk storage, magnetic cassettes, magnetic tape, magnetic disk storage or other magnetic storage devices, or any other medium capable of storing computer-readable instructions. Computer 1010 may include or have access to a computing environment that includes input 1016, output 1018, and a communication connection 1020. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 1002 of the computer 1010. A hard drive, CD-ROM, and RAM are some examples of articles including a non-transitory computer-readable medium. For example, a computer program 1022 with instructions for the computer 1010, according to the teachings of the present disclosure, may be included on a CD-ROM and loaded from the CD-ROM to a hard drive. The computer-readable instructions allow computer 1010 to provide generic access controls in a COM based computer network system having multiple users and servers.

In the foregoing detailed description, the method and apparatus of the present disclosure have been described with reference to specific embodiments thereof. It will, however, be evident that various modifications and changes may be made thereto without departing from the broader spirit and scope of the present disclosure. The present specification and figures are accordingly to be regarded as illustrative rather than restrictive.

To further illustrate the device and related method disclosed herein, a non-limiting list of examples is provided below. Each of the following non-limiting examples can stand on its own, or can be combined in any permutation or combination with any one or more of the other examples.
In Example 1, an automated teller machine can include: a housing; and a display positioned on the housing, the display being rotatably positionable about an axis; a position sensor configured to sense a rotational position of the display; and a processor configured to determine a mode of operation of the automated teller machine in response to the sensed rotational position of the display.
In Example 2, the automated teller machine of Example 1 can optionally be configured such that different modes of operation of the automated teller machine include different settings of the automated teller machine.
In Example 3, the automated teller machine of any one of Examples 1-2 can optionally be configured such that: when the display is positioned at a first rotational position, the processor is configured to set the automated teller machine to a first set of settings; when the display is positioned at a second rotational position different from the first rotational position, the processor is configured to set the automated teller machine to a second set of settings different from the first set of settings; and when the display is positioned at a third rotational position different from the first and second rotational positions, the processor is configured to set the automated teller machine to a third set of settings different from the first and second sets of settings.
In Example 4, the automated teller machine of any one of Examples 1-3 can optionally be configured such that the display is manually rotatable by an operator of the automated teller machine, and the processor is configured to switch automatically between different sets of settings in response to the rotation.
In Example 5, the automated teller machine of any one of Examples 1-4 can optionally be configured such that the rotation of the display includes detents configured to snap the display into one of the first, second, or third rotational positions.
In Example 6, the automated teller machine of any one of Examples 1-5 can optionally further include a locking mechanism configured to prevent rotation of the display away from one of first, second, or third rotational positions.
In Example 7, the automated teller machine of any one of Examples 1-6 can optionally be configured such that the housing includes a customer-facing side and a teller-facing side opposite the customer-facing side.
In Example 8, the automated teller machine of any one of Examples 1-7 can optionally be configured such that: the first rotational position is facing toward the customer-facing side of the housing and facing a customer position; and the first set of settings includes self-service settings.
In Example 9, the automated teller machine of any one of Examples 1-8 can optionally be configured such that the self-service settings include at least one of: a first amount of cash available for withdrawal, first recycler settings, first counterfeit settings, first denominations of cash available, and access to a customer-only vault.
In Example 10, the automated teller machine of any one of Examples 1-9 can optionally be configured such that: the second rotational position is facing toward the customer-facing side of the housing but angled away from a customer position; and the second set of settings includes assisted-service settings.
In Example 11, the automated teller machine of any one of Examples 1-10 can optionally be configured such that the assisted-service settings include at least one of: a second amount of cash, greater than the first amount, available for withdrawal, second recycler settings that are less restrictive than the first recycler settings, second counterfeit settings that are less restrictive than the first counterfeit settings, second denominations, greater than the first denominations, of cash available, and access to a customer-only vault and a teller-only vault.
In Example 12, the automated teller machine of any one of Examples 1-11 can optionally be configured such that: the third rotational position is facing away from the customer-facing side of the housing; and the third set of settings includes teller-service settings.
In Example 13, the automated teller machine of any one of Examples 1-12 can optionally be configured such that the teller-service settings include at least one of: a third amount of cash, greater than the second amount, available for withdrawal, third recycler settings that are less restrictive than the second recycler settings, third counterfeit settings that are less restrictive than the second counterfeit settings, third denominations, greater than the second denominations, of cash available, and access to a customer-only vault and a teller-only vault.
In Example 14, the automated teller machine of any one of Examples 1-13 can optionally be configured such that different modes of operation of the automated teller machine include different selectable options displayed on the display.
In Example 15, the automated teller machine of any one of Examples 1-14 can optionally be configured such that: when the display is positioned at a first rotational position, the processor is configured to display a first set of selectable options on the display; when the display is positioned at a second rotational position different from the first rotational position, the processor is configured to display a second set of selectable options, different from the first set of selectable options, on the display; and when the display is positioned at a third rotational position different from the first and second rotational positions, the processor is configured to display a third set of selectable options, different from the first and second sets of selectable options, on the display.
In Example 16, the automated teller machine of any one of Examples 1-15 can optionally further include a recycler positioned in the housing and coupled to the processor, the recycler configured to dispense and accept deposit of bank notes.
In Example 17, the automated teller machine of any one of Examples 1-16 can optionally further include a sidecar positioned in the housing horizontally adjacent to the recycler and coupled to the processor, the sidecar including at least one of a receipt printer, a check scanner, a document scanner, a statement printer, and a coin dispenser.
In Example 18, the automated teller machine of any one of Examples 1-17 can optionally further include an interface positioned on the housing above the sidecar and coupled to the processor, the interface including at least one of a touch-sensitive display, a contactless card reader, a security camera, and an audio jack.
In Example 19, a method for operating an automated teller machine having a rotatable display can include: sensing, with a rotation sensor coupled to a processor, a rotational position of the rotatable display; determining, with the processor, that the rotational position corresponds to one of three specified rotational positions; and in response to the determination that the rotational position corresponds to one of three specified rotational positions, selecting, with the processor, one of three specified sets of settings for the automated teller machine.
In Example 20, a method for operating an automated teller machine having a rotatable display can include: sensing, with a rotation sensor coupled to a processor, a rotational position of the rotatable display; determining, with the processor, that the rotational position corresponds to one of three specified rotational positions; and in response to the determination that the rotational position corresponds to one of three specified rotational positions, displaying, with the processor, one of three specified sets of selectable options on the display.

## Claims

1. An automated teller machine, comprising:
a housing (106);
a display positioned on the housing, the display being rotatably positionable about an axis (102);
a position sensor configured to sense a rotational position of the display; and
a processor configured to determine a mode of operation of the automated teller machine in response to the sensed rotational position of the display.

2. The automated teller machine of claim 1, wherein different modes of operation of the automated teller machine include different settings of the automated teller machine.

3. The automated teller machine according to any of the preceding claims, wherein:
when the display is positioned at a first rotational position, the processor is configured to set the automated teller machine to a first set of settings;
when the display is positioned at a second rotational position different from the first rotational position, the processor is configured to set the automated teller machine to a second set of settings different from the first set of settings; and
when the display is positioned at a third rotational position different from the first and second rotational positions, the processor is configured to set the automated teller machine to a third set of settings different from the first and second sets of settings.

4. The automated teller machine according to any of the preceding claims, wherein the display is manually rotatable by an operator of the automated teller machine, and the processor is configured to switch automatically between different sets of settings in response to the rotation.

5. The automated teller machine according to any of the preceding claims, wherein the rotation of the display includes detents configured to snap the display into one of the first, second, or third rotational positions.

6. The automated teller machine according to any of the preceding claims, further comprising a locking mechanism configured to prevent rotation of the display away from one of first, second, or third rotational positions.

7. The automated teller machine according to any of the preceding claims, wherein:
the first rotational position is facing toward the customer-facing side of the housing and facing a customer position; and
the first set of settings includes self-service settings; and
the second rotational position is facing toward the customer-facing side of the housing but angled away from a customer position; and
the second set of settings includes assisted-service settings; and
the third rotational position is facing away from the customer-facing side of the housing; and
the third set of settings includes teller-service settings.

8. The automated teller machine according to any of the preceding claims, wherein the self-service settings include at least one of:
a first amount of cash available for withdrawal,
first recycler settings,
first counterfeit settings,
first denominations of cash available, and
access to a customer-only vault.

9. The automated teller machine according to any of the preceding claims, wherein the assisted-service settings include at least one of:
a second amount of cash, greater than the first amount, available for withdrawal,
second recycler settings that are less restrictive than the first recycler settings,
second counterfeit settings that are less restrictive than the first counterfeit settings,
second denominations, greater than the first denominations, of cash available, and
access to a customer-only vault and a teller-only vault.

10. The automated teller machine according to any of the preceding claims, wherein the teller-service settings include at least one of:
a third amount of cash, greater than the second amount, available for withdrawal,
third recycler settings that are less restrictive than the second recycler settings,
third counterfeit settings that are less restrictive than the second counterfeit settings,
third denominations, greater than the second denominations, of cash available, and
access to a customer-only vault and a teller-only vault.

11. The automated teller machine according to any preceding claim, wherein:
when the display is positioned at a first rotational position, the processor is configured to display a first set of selectable options on the display;
when the display is positioned at a second rotational position different from the first rotational position, the processor is configured to display a second set of selectable options, different from the first set of selectable options, on the display; and
when the display is positioned at a third rotational position different from the first and second rotational positions, the processor is configured to display a third set of selectable options, different from the first and second sets of selectable options, on the display.

12. The automated teller machine according to any of the preceding claims, further comprising a recycler (152) positioned in the housing and coupled to the processor, the recycler configured to dispense and accept deposit of bank notes.

13. The automated teller machine according to any of the preceding claims, further comprising a sidecar (162) positioned in the housing horizontally adjacent to the recycler and coupled to the processor, the sidecar including at least one of a receipt printer, a check scanner, a document scanner, a statement printer, and a coin dispenser.

14. The automated teller machine according to any of the preceding claims, further comprising an interface (172) positioned on the housing above the sidecar and coupled to the processor, the interface including at least one of a touch-sensitive display, a contactless card reader, a security camera, and an audio jack.

15. A method for operating an automated teller machine having a rotatable display, the method comprising:
Sensing (step 902), with a rotation sensor coupled to a processor, a rotational position of the rotatable display; and
Determining (step 904), with the processor, that the rotational position corresponds to one of three specified rotational positions; and in response to the determination that the rotational position corresponds to one of three specified rotational positions, selecting (step 906), with the processor, one of three specified sets of settings for the automated teller machine.
